## Europäisches Patentamt

## European Patent Office

## Office européen des brevets

(19)

(11) Veröffentlichungsnummer: **0 020 418**
**B1**

(12)

# EUROPÄISCHE PATENTSCHRIFT

(45) Veröffentlichungstag der Patentschrift:
07.07.82

(51) Int. Cl.³: **G 01 N 29/04**

(21) Anmeldenummer: **79901190.3**

(22) Anmeldetag: **11.09.79**

(86) Internationale Anmeldenummer:
**PCT/DE 79/00105**

(87) Internationale Veröffentlichungsnummer:
**WO 80/00616 (03.04.80 Gazette 80/7)**

(54) **ULTRASCHALL-PRÜFVORRICHTUNG ZUM ZERSTÖRUNGSFREIEN PRÜFEN VON SCHWEISSNÄHTEN.**

(30) Priorität: **16.09.78 DE 2840455**

(43) Veröffentlichungstag der Anmeldung:
**07.01.81 Patentblatt 81/1**

(45) Bekanntmachung des Hinweises auf die Patenterteilung:
**07.07.82 Patentblatt 82/27**

(84) Benannte Vertragsstaaten:
**FR GB**

(56) Entgegenhaltungen:
**CITED DOKUMENTS (56):**
**DE-A-2 751 810**
**FR-A-2 295 422**
**US-A-3 350 925**
**US-A-3 868 847**

(73) Patentinhaber: **IBEMA Elektrotechnik und Maschinenbau GmbH & Co Kommanditgesellschaft, Tannenweg 10, 5205 St. Augustin 2 (DE)**

(72) Erfinder: **REHME, Wilfried, Brunnenweg 11, D-5200 Sieburg-Braschoss (DE)**
Erfinder: **STIPURA, Anatoly, Ul Kirova 9, Dnepropetrovsk (SU)**
Erfinder: **RIPNYI, Victor, Pr Pravdi 113, Dnepropetrovsk (SU)**
Erfinder: **DONSKOI, Leonid, Ul Argunovskaja 12, Moscow (SU)**
Erfinder: **SCHEVTSCHENKO, Nikolai, Pr Mira 188, Moscow (SU)**

(74) Vertreter: **Buschhoff, Josef, Dipl.-Ing. et al, Patentanwälte Dipl.-Ing. Buschhoff Dipl.-Ing. Hennicke, Dipl.-Ing. Vollbach Kaiser-Wilhelm-Ring 24 Postfach 190 408, D-5000 Köln 1 (DE)**

## Ultraschall-Prüfvorrichtung zum zerstörungsfreien Prüfen von Schweissnähten

Technisches Gebiet

Die Erfindung betrifft eine Ultraschall-Prüfvorrichtung zum zerstörungsfreien Prüfen von Schweissnähten, insbesondere bei Rohren mit gerader oder wendelförmiger Schweissnaht mit auf beiden Seiten der Naht angeordneten, diese senkrecht zur Nahtlängsrichtung beschallenden Längsfehler-Prüfschwingern und beidseits neben diesen angeordneten Querfehler-Prüfschwingern, die ihre Schallstrahlen im spitzen Winkel zur Schweissnaht aussenden.

Stand der Technik

Bei der Schweissnahtprüfung von Rohren, insbesondere von unter Pulver geschweissten Längsnaht- oder Spiralnaht-Grossrohren, werden Ultraschall-Prüfvorrichtungen mit mehreren Prüfköpfen eingesetzt, die die Schweissnaht auf Längs- und Querfehler prüfen. Hierbei werden unter Längsfehlern solche Fehlstellen verstanden, die sich in Längsrichtung der Schweissnaht erstrecken, wie beispielsweise Schlacken- oder Lufteinschlüsse, während Querfehler solche Fehler sind, die quer zur Längsrichtung der Schweissnaht verlaufen.

Bei den Prüfvorrichtungen werden verschiedene Arten von Prüfköpfen verwendet. Normal- und Winkelprüfköpfe, die in der Regel als Sender- und Empfänger-Prüfköpfe (SE-Prüfköpfe) ausgebildet sind, haben nur einen Prüfschwinger, der seine Schallstrahlen senkrecht oder unter einem spitzen Winkel zur Schweissnaht aussendet. Daneben gibt es Doppel-Winkelprüfköpfe, die entweder zwei unter einem Winkel angeordnete Prüfschwinger aufweisen, von denen der eine zur Ermittlung von Längsfehlern und von denen der andere zur Ermittlung von Querfehlern dient, oder die nur einen Prüfschwinger aufweisen, von dem ein Teil der Schallstrahlen abgespalten und unter einem Winkel zur Schweissnaht weitergeführt wird, um neben der Ermittlung von Längsfehlern gleichzeitig Querfehler zu erfassen.

Bei einer bekannten Prüfvorrichtung werden vier Normal- oder Winkelprüfköpfe symmetrisch zur Naht in K- oder X-förmiger Anordnung verwendet. Die vier Prüfköpfe bilden hierbei eine sogenannte Prüfspinne, die auf das Rohr aufgesetzt und an der Schweissnaht entlanggeführt wird. Die schallübertragende Ankopplung wird durch Zuführen von Wasser in die Berührungsebene erreicht, wobei die einwandfreie Ankopplung ebenfalls durch Ultraschall mit besonderen Kontrollschwingern überwacht wird, um eventuelle Ankopplungsstörungen, wie Luftblasen oder losen Zunder, festzustellen.

Im Betrieb werden die Prüfköpfe über einen programmierten Taktumschalter mit der Ultraschall- und Auswerteelektronik verbunden und im Takt der Impulsfolgefrequenz in Längs- und Querfehler-Reflexionsprüftakten sowie zusätzlichen Koppelkontrolltakten einzeln oder paarweise abgefragt.

Bei einer anderen bekannten Ausführung werden zwei Doppel-Winkelprüfköpfe verwendet, die auf beiden Seiten der Schweissnaht einander gegenüberliegen und je zwei unter 45° von einem Quarz abgespaltene Schallstrahlen aussenden, von denen die einen die Schweissnaht senkrecht zur Nahtlängsrichtung beschallen, um die Längsfehler zu ermitteln, und von denen die anderen die Schweissnaht unter 45° beschallen, um die Querfehler zu ermitteln.

Alle bekannten Einrichtungen haben die Eigenart, dass eine vollständige Prüfung auf Längs- und Querfehler nur dann möglich ist, wenn alle Prüfköpfe auf das Rohr aufgesetzt sind. Die Prüfung ist deshalb im mittleren Bereich eines Rohres einwandfrei, versagt aber am Rohranfang oder am Rohrende, wenn das Rohr gerade unter die Prüfspinne geschoben oder von dieser abgezogen wird und zwei der Prüfköpfe in K- oder X-Anordnung noch nicht oder nicht mehr auf dem Rohr aufliegen oder wenn bei Verwendung von Doppel-Winkelprüfköpfen deren unter 45° geneigte Schallstrahlen zur Querfehlerermittlung sich jenseits des Rohranfanges bzw. Rohrendes treffen.

Durch diese Eigenart ergibt sich bei den bekannten Vorrichtungen der Nachteil, dass der Schweissnahtbereich am Rohranfang oder Rohrende oder auch beide Bereiche bis zu ca. 200 mm nicht vollständig auf Längs- und Querfehler geprüft werden können. Es war deshalb bisher stets notwendig, diese ungeprüften Schweissnahtbereiche am Rohranfang und Rohrende zusätzlich manuell mit Ultraschall-Handgeräten zu prüfen, was einen bedeutenden technischen und personellen Aufwand erforderte.

Bei einer älteren, nicht zum Stande der Technik gehörenden Prüfvorrichtung des Anmelders sind die Prüfschwinger für die Längsfehler- und Querfehlererkennung in Prüfköpfen untergebracht, die sternförmig symmetrisch zur Schweissnaht in einer Prüfspinne angeordnet sind. Mit dieser eingangs erwähnten Einrichtung ist es möglich, Schweissnähte vom Anfang bis zum Ende vollständig und vollautomatisch auf Längsfehler und Querfehler zu prüfen. Für die vollständige Schweissnahtprüfung sind aber mindestens sechs Prüfköpfe erforderlich. Bei einer anderen Ausführungsform werden Doppel-Winkelprüfköpfe verwendet, die je zwei Winkelschwinger aufweisen, von denen der eine seine Schallstrahlen im rechten Winkel zur Schweissnaht aussendet (Längsfehlererkennung) und von denen der andere seine Schallstrahlen in einem spitzen Winkel zur Schweissnaht aussendet (Querfehlererkennung). Auch hier sind mindestens vier Prüfköpfe erforderlich, um die Längs- und Querfehler vom Anfang bis zum Ende der Schweissnaht mit der gleichen Vorrichtung vollständig ermitteln zu können.

Darstellung der Erfindung

Aufgabe der Erfindung ist es, eine Prüfvorrichtung zu schaffen, die einen geringen Raumbedarf hat und bei welcher die Prüfköpfe zentral eingestellt werden können und mit der eine Schweissnaht vollständig und automatisch vom Anfang bis zum Ende der Naht geprüft werden kann.

Diese Aufgabe wird mit der Erfindung dadurch gelöst, dass jeweils ein Längsfehler-Prüfschwinger und zwei Querfehler-Prüfschwinger gemeinsam in je einem von zwei Prüfaggregaten untergebracht sind, die auf beiden Seiten der Schweissnaht einander gegenüberliegend angeordnet sind, und dass die beiden in einem jeden Prüfaggregat angeordneten Querfehler-Prüfschwinger ihre Schallstrahlen unter einem Winkel zur Schweissnaht in entgegengesetzten Richtungen zum Schweissnahtanfang bzw. zum Schweissnahtende hin aussenden. Diese Ausgestaltung hat den Vorteil, dass auf jeder Seite der Schweissnaht nur noch je ein Prüfaggregat vorhanden ist, welches die erforderlichen Prüfschwinger zur Längsfehler- und Querfehlererkennung aufweist.

Nach der Erfindung können die Prüfaggregate Prüfblöcke sein, in welchen mindestens die Prüfschwinger zur Querfehlerbestimmung in ihrer Lage zueinander und/oder in ihrer Stellung zur Schweissnaht verstellbar montiert sind. Die Prüfschwinger können dann in ihrer optimalen Stellung genau einjustiert werden.

Bei einer anderen Ausführungsform der Erfindung können die Prüfaggregate Prüfköpfe sein, in denen jeweils ein Längsfehler-Prüfschwinger und zwei Querfehler-Prüfschwinger fest eingebaut sind. Bei dieser Ausführungsform ist es zweckmässig, wenn die fest eingebauten Prüfschwinger von zwei auf gegenüberliegenden Seiten der Schweissnaht angeordneten Prüfköpfen so einjustiert sind, dass die Schallstrahlen der auf gleichen Seiten neben den Längsfehler-Prüfschwin- gern angeordneten Querfehler-Prüfschwinger bei- der Prüfköpfe die zu prüfende Schweissnaht an der gleichen Stelle treffen.

Zur raschen Einstellung der Prüfköpfe mit fest eingebauten Längsfehler- und Querfehler-Prüfschwingern sind die Prüfköpfe vorteilhaft in ihrem Abstand zur Schweissnaht und in ihrer gegenseitigen Lage zueinander verstellbar.

Kurze Beschreibung der Zeichnungen

Weitere Merkmale und Vorteile der Erfindung ergeben sich aus der folgenden Beschreibung und den beigefügten Zeichnungen, in denen die Erfindung an einem Ausführungsbeispiel näher erläutert ist. Es zeigt:

Fig. 1 eine Ultraschall-Prüfvorrichtung nach der Erfindung zum Prüfen der Längsschweissnaht eines Rohres in einer schematischen Draufsicht am Rohranfang.

Fig. 2 den Gegenstand der Fig. 1 in einer schematischen Draufsicht in der Mitte des Rohres und

Fig. 3 den Gegenstand der Fig. 1 in einer schematischen Draufsicht am Ende des Rohres.

Wege zur Ausführung der Erfindung

In den Zeichnungen ist mit 15 ein Stahlrohr bezeichnet, das aus einem Blech gebogen ist und dessen Längsschweissnaht 16 auf Längsfehler und Querfehler geprüft werden soll. Zu diesem Zweck wird das Rohr 15 in Richtung des Pfeiles 17 unter einer Ultraschall-Prüfvorrichtung vorbeigeschoben, die in den Zeichnungen schematisch dargestellt und in ihrer Gesamtheit mit 18 bezeichnet ist. Die Prüfvorrichtung 18 hat zwei Prüfaggregate 65 und 66, die auf beiden Seiten der Schweissnaht 16 einander gegenüberliegend angeordnet sind und von einer hier nicht näher dargestellten Hubvorrichtung getragen werden und die auf das Rohr 15 abgesenkt werden können, wenn die vordere Stirnkante 32 des Rohres die Prüfvorrichtung erreicht.

Jedes der beiden Prüfaggregate 65 und 66 hat je einen fest eingebauten Längsfehler-Prüfschwinger 67 bzw. 68, der seine Schallstrahlen 69 bzw. 70 senkrecht zur Schweissnaht 16 aussendet. Die Prüfaggregate 65 und 66 sind gegeneinander in Längsrichtung und quer zur Schweissnaht verstellbar und so aufeinander einjustiert, dass die Prüfschwinger 67 und 68 einander gegenüberliegen, so dass sie nicht nur die von ihnen ausgesandten und an der Schweissnaht reflektierten Schallstrahlen wieder empfangen, sondern zur Kontrolle des akustischen Kontaktes auch die vom Längsfehler-Prüfschwinger des auf der anderen Seite der Schweissnaht angeordneten Prüfaggregates ausgesandten Schallstrahlen empfangen können.

Auf beiden Seiten des Längsfehler-Prüfschwingers 67 bzw. 68 ist in jedem Prüfaggregat 65 bzw. 66 je ein Querfehler-Prüfschwinger 71 und 72 bzw. 73 und 74 angeordnet. Diese Querfehler-Prüfschwinger stehen im Winkel zum Längsfehler- Prüfschwinger 67 bzw. 68, so dass ihre Schallstrahlen 75 und 76 bzw. 77 und 78 die Schweissnaht 16 unter einem spitzen Winkel $\alpha$ bzw. $\beta$ an den gleichen Stellen 51 bzw. 61 treffen. Hierbei können die Querfehler-Prüfschwinger 71 und 72 bzw. 73 und 74 fest eingebaut sein; es ist jedoch auch möglich, sie in ihrer gegenseitigen Lage zueinander und/oder in ihrer Stellung zur Schweissnaht verstellbar im Prüfaggregat 65 bzw. 66 zu montieren. Die Prüfvorrichtung kann dann dem jeweils zu prüfenden Werkstück und der zu prüfenden Schweissnaht besser angepasst werden. Demgegenüber sind Prüfköpfe mit fest eingebauten, vorjustierten Prüfschwingern leichter zu handhaben.

Bei der Prüfung werden die Prüfaggregate 65 und 66 beim Anfang der Prüfung an der vorderen Stirnkante des Rohres in den folgenden Takten abgefragt, wobei die Längsfehlerprüfung mit «L», die Querfehlerprüfung mit «Q» und die Koppelkontrolle mit «K» bezeichnet ist:

Takt 1 : L 68 → 68
Takt 2 : L 67 → 67
Takt 3 : K 68 → 67
Takt 4 : K 67 → 68
Takt 5 : Q 73 → 71
Takt 6 : Q 71 → 73

Man erkennt, dass beim weiteren Vorschub des Rohres 15 in Richtung des Pfeiles 17 die vordere Stirnkante 32 in den Bereich des Punktes 61 gelangt, wo die von dem Querfehler-Prüfschwinger 72 ausgesandten Schallstrahlen 76 an der Schweissnaht 16 reflektiert werden und zum Querfehler-Prüfschwinger 74 des gegenüberliegenden Prüfaggregates 66 weiterlaufen oder umgekehrt. Der bisher auf Querfehler noch nicht geprüfte Bereich der Schweissnaht am Anfang des Rohres kann dann von den Querfehler-Prüfköpfen 72 und 74 in folgenden Takten geprüft werden:

Takt 7 : Q 74 → 72
Takt 8 : Q 72 → 74

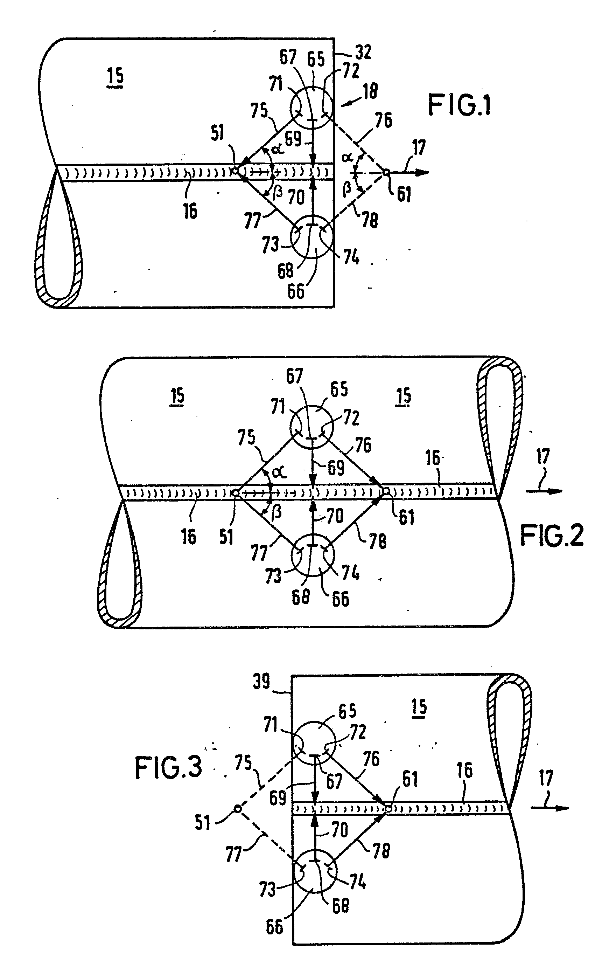

In gleicher Weise wird die Schweissnaht in der Mitte des Rohres geprüft, wie dies in Fig. 2 schematisch dargestellt ist. Hierbei ist es natürlich nicht notwendig, die Prüfaggregate in allen vorstehend angegebenen Takten abzufragen, sondern es genügt für die vollständige Prüfung folgende Taktfolge:

Takt 1 : L 68 → 68
Takt 2 : L 67 → 67
Takt 3 : K 68 → 67
Takt 4 : Q 73 → 71
Takt 5 : Q 74 → 72

Sobald das Rohr 15 mit seiner hinteren Stirnkante 39 die Stelle 51 verlässt, ist eine Prüfung der Schweissnaht 16 nur noch mit den Längsfehler-Prüfschwingern 67 und 68 und den Querfehler-Prüfschwingern 72 und 74 möglich. Zu diesem Zeitpunkt ist jedoch die Schweissnaht bis zur hinteren Stirnkante 39 des Rohres von den Querfehler-Prüfschwingern 71 und 73 bereits auf Querfehler geprüft, so dass in diesem letzten Teil der Schweissnaht nur noch eine Längsfehlerprüfung erforderlich ist, bis die Prüfaggregate 65 und 66 vom Rohr abgehoben werden.

Die Erfindung ist nicht auf das Ausführungsbeispiel beschränkt, sondern es sind auch andere Ausführungsformen möglich, bei denen die Prüfschwinger zur Längsfehler- und Querfehlererkennung in einem Prüfaggregat untergebracht sind. Wesentlich ist nur, dass zwei Prüfstrahlen zur Querfehlererkennung unter einem Winkel zur Schweissnaht in entgegengesetzten Richtungen zum Schweissnahtanfang und zum Schweissnahtende hin gerichtet sind, die von etwa der gleichen Stelle ausgehen wie die Schallstrahlen zur Längsfehlererkennung. Ausserdem ist es natürlich möglich, die Prüfung auch in anderen Taktfolgen als in den vorstehend beschriebenen durchzuführen, ohne dass hierdurch der Rahmen der Erfindung überschritten wird.

Gewerbliche Verwertbarkeit

Die Erfindung ist bei der zerstörungsfreien Prüfung von Werkstücken, insbesondere von Schweissnähten, gewerblich anwendbar.

Patentansprüche:

1. Ultraschall-Prüfvorrichtung (18) zum zerstörungsfreien Prüfen von Schweissnähten (16), insbesondere bei Rohren (15) mit gerader oder wendelförmiger Schweissnaht (16), mit auf beiden Seiten der Naht (16) angeordneten, diese senkrecht zur Nahtlängsrichtung beschallenden Längsfehler-Prüfschwingern (67 bzw. 68) und beidseits neben diesen angeordneten Querfehler-Prüfschwingern (71, 72 bzw. 73, 74), die ihre Schallstrahlen (75, 76 bzw. 77, 78) im spitzen Winkel zur Schweissnaht (16) aussenden, dadurch gekennzeichnet, dass jeweils ein Längsfehler-Prüfschwinger (67 bzw. 68) und zwei Querfehler-Prüfschwinger (71 und 72 bzw. 73, 74) gemeinsam in je einem von zwei Prüfaggregaten (65 bzw. 66) untergebracht sind, die auf beiden Seiten der Schweissnaht (16) einander gegenüberliegend angeordnet sind, und dass die beiden in einem jeden Prüfaggregat (65 bzw. 66) angeordneten Querfehler-Prüfschwinger (71 und 72 bzw. 73, 74) ihre Schallstrahlen (75, 76 bzw. 77, 78) unter einem Winkel ($\alpha$ bzw. $\beta$) zur Schweissnaht (16) in entgegengesetzten Richtungen zum Schweissnahtanfang bzw. zum Schweissnahtende hin aussenden.

2. Vorrichtung nach Anspruch 1, dadurch gekennzeichnet, dass die Prüfaggregate (65 bzw. 66) Prüfblöcke sind, in welchen mindestens die Prüfschwinger (71, 72 bzw. 73, 74) zur Querfehlerbestimmung in ihrer Lage zueinander und/oder in ihrer Stellung zur Schweissnaht (16) verstellbar montiert sind.

3. Vorrichtung nach Anspruch 1, dadurch gekennzeichnet, dass die Prüfaggregate (65 bzw. 66) Prüfköpfe sind, in denen jeweils ein Längsfehler-Prüfschwinger (67 bzw. 68) und zwei Querfehler-Prüfschwinger (71 und 72 bzw. 73 und 74) fest eingebaut sind.

4. Vorrichtung nach Anspruch 3, dadurch gekennzeichnet, dass die fest eingebauten Prüfschwinger (67, 71, 72 bzw. 68, 73, 74) von zwei auf gegenüberliegenden Seiten der Schweissnaht (16) angeordneten Prüfköpfen (65 bzw. 66) so einjustiert sind, dass die Schallstrahlen (75, 77 bzw. 76, 78) der auf gleichen Seiten neben den Längsfehler-Prüfschwingern (67 bzw. 68) angeordneten Querfehler-Prüfschwinger (71 und 73 bzw. 72 und 74) beider Prüfköpfe (65 und 68) die zu prüfende Schweissnaht (16) an der gleichen Stelle (51 bzw. 61) treffen.

5. Vorrichtung nach Anspruch 3 oder 4, dadurch gekennzeichnet, dass die Prüfköpfe (65, 66) mit den fest eingebauten Längsfehler- und Querfehler-Prüfschwingern (67, 71, 72 bzw. 68, 73, 74) in ihrem Abstand zur Schweissnaht (16) und in ihrer gegenseitigen Lage zueinander verstellbar sind.

**Revendications**

1. Dispositif de contrôle à ultra-sons (18), pour la vérification non destructive de cordons de soudure (16), notamment sur des tubes (15) comportant un cordon de soudure (16) rectiligne ou hélicoïdal, ce dispositif comportant, de part et d'autre du cordon de soudure (16), des oscillateurs de controle (67, 68) pour détecter les defauts longitudinaux au moyen de faisceaux d'ultra-sons qu'ils émettent perpendiculairement au cordon de soudure (16), chacun de ces oscillateurs (67, 68) étant associé à deux autres oscillateurs de contrôle (71, 72 et 73, 74), pour détecter les défauts transversaux, respectivement disposés de chaque côté d'un oscillateur de contrôle des défauts longitudinaux (67, 68) et émettant leurs faisceaux d'ultrasons obliquement par rapport au cordon de soudure, caractérisé en ce qu'il comporte deux blocs de contrôle (65, 66), contenant chachun l'un des oscillateurs de contrôle (67, 68) servant à détecter les défauts longitudinaux, groupés dans le bloc de contrôle (65, 66) avec deux oscillateurs de contrôle (71, 72 et 73, 74) servant à détecter les défauts transversaux, les deux blocs de contrôle (65, 66) étant disposés en regard l'un de l'autre de chaque côté du cordon de soudure (16) et en ce que les deux oscillateurs de contrôle des défauts transversaux (71, 72 et 73, 74) respectivement montés dans chaque bloc de contrôle (65, 66), émettent leurs faisceaux d'ultra-sons (75, 76 et 77, 78) obliquement par rapport au cordon de soudure (16) suivant des angles d'incidence opposés (α, β), dirigés d'une part vers le point initial du cordon de soudure et d'autre part vers le point terminal de ce cordon.

2. Dispositif selon la revendication 1, caractérisé en ce que les blocs de contrôle (65,66) sont constitués par des organes de contrôle compacts, dans chacun desquels au moins les oscillateurs de contrôle des défauts transversaux (71, 72 et 73, 74) sont montés de manière réglable quant à leur position relative et/ou quant à leur position par rapport au cordon de soudure (16).

3. Dispositif selon la revendication 1, caractérisé en ce que les blocs de contrôle (65, 66) sont constitués par des têtes de contrôle dans chacune desquelles se trouvent montés de manière fixe un oscillateur de contrôle des défauts longitudinaux (67,68) et deux oscillateurs de contrôle des défauts transversaux (71, 72 et 73, 74).

4. Dispositif selon la revendication 3, caractérisé en ce que les oscillateurs de contrôle (67, 71 72 et 68,73,74) montés en position fixe dans les deux têtes de contrôle (65,66) situées de part et d'autre du cordon de soudure (16) sont réglés de telle manière que les faisceaux d'ultra-sons (75,77 ou 76,78) des oscillateurs de contrôle des défauts transversaux (71,73 ou 72,74) disposés, dans chaque tête de contrôle (65,66), du même côté et au voisinage d'un oscillateur de contrôle des défauts longitudinaux (67,68), en direction du cordon de soudure (16), coupent le cordon de soudure au même endroit (51,61) que les faisceaux d'ultrasons correspondants (76, 78 ou 75,77) émis de l'autre côté du cordon de soudure.

5. Dispositif selon l'une des revendications 3 ou 4, caractérisé en ce que les têtes de contrôle (65,66), avec les oscillateurs de contrôle des défauts longitudinaux et transversaux (65,71,72 et 68,73,74) qu'elles contiennent, sont réglables en écartement par rapport au cordon de soudure (16) et quant à leur position relative de part et d'autre de ce cordon.

## Claims

1. Ultrasonic tester (18) for the non-destructive testing of welds (16), especially in pipes (15) with a straight or helical weld (16), with longitudinal-fault test oscillators (67 or 68) located on both sides of the weld (16) and exposing the latter to sonic waves perpendicularly to the longitudinal direction of the weld, and with transverse-fault test oscillators (71,72 or 73,74) which are located on both sides next to the former and which emit their sonic rays (75, 76 or 77,78) at an acute angle to the weld (16), characterised in that one longitudinal-fault test oscillator (67 or 68) and two transverse-fault test oscillators (71 and 72 or 73 and 74) are accommodated together respectively in each of two test units (65 or 66) which are located opposite one another on both sides of the weld (16), and in that the two transverse-fault test oscillators (71 and 72 or 73 and 74) located in each test unit (65 or 66) emit their sonic rays (75, 76 or 77, 78) at an angle (α and β respectively) to the weld (16), in opposite directions, towards the start of the weld and towards the end of the weld respectively.

2. Tester according to Claim 1, characterised in that the test units (65 or 66) are test blocks in which at least the test oscillators (71,72 or 73,74) for determining transverse faults are mounted adjustably in their positions relative to one another and/or in their positions relative to the weld (16).

3. Tester according to Claim 1, characterised in that the test units (65 or 66) are test heads in which in each case one longitudinal-fault test oscillator (67 or 68) and two transverse-fault test oscillators (71 and 72 or 73 and 74) are installed fixedly.

4. Tester according to Claim 3, characterised in that the fixedly installed test oscillators (67,71,72 or 68,73, 74) of two test heads (65 or 66) located on opposite sides of the weld (16) are adjusted so that the sonic rays (75,77 or 76,78) of the transverse-fault test oscillators (71 and 73 or 72 and 74), located next to the longitudinal-fault test oscillators (67 or 68) on the same sides, of the two test heads (65 and 66) strike the weld (16) to be tested at the same point (51 and 61 respectively).

5. Tester according to Claim 3 or 4, characterised in that the test heads (65,66), together with the fixedly installed longitudinal-fault and transverse-fault test oscillators (67,71,72 or 68,73,74), are adjustable in their distances from the weld (16) and in their mutual positions relative to one another.

FIG.1

FIG.2

FIG.3